# EUROPEAN PATENT APPLICATION

(11) **EP 4 478 597 A2**
(43) Date of publication of application: **18.12.2024**
(21) Application number: 24204711.6
(22) Date of filing: 04.10.2024
(51) Int. Cl.: H02M 3/335, H02M 1/36, H02M 3/28, H02M 1/00, H02M 3/00

(54) **CONTROL OF MULTI-PHASE COUPLED LLC RESONANT CONVERTERS**

(71) Applicant: NXP USA, Inc., Austin TX 78735 (US); University of Toronto, Ontario Toronto M5S 1A5 (CA)
(72) Inventor: Cobani, Orest, 5656AG Eindhoven (NL); TRESCASES, Olivier, 5656AG Eindhoven (NL); Bertolini, Luca, 5656AG Eindhoven (NL); van den Berg, Arjan, 5656AG Eindhoven (NL); Halberstadt, Hans, 5656AG Eindhoven (NL); Lammers, Thieu, 5656AG Eindhoven (NL)
(74) Representative: Hardingham, Christopher Mark

(57) **Abstract**

Disclosed is a multi-phase coupled-LLC, CLLC, resonant converter, and controller therefor, the converter having a plurality of primary-side LLC circuits, each comprising a series-arrangement of a capacitance and two inductances between a respective input and a common node, wherein each input is switchable between a first supply voltage level and a second supply voltage level, the controller comprising: a hysteretic controller; and a finite state machine; wherein the hysteretic controller is configured to trigger a change of state of the FSM in response to a voltage level of a resonant capacitor of a one of the LLC circuits crossing a trigger voltage level; and wherein the FSM is configured to change between a plurality of states, wherein each state corresponds to a different combination of states for each of the LLC circuits of the multiphase CLLC. Corresponding methods are also disclosed.

## Description

### FIELD OF THE DISCLOSURE

This present disclosure relates to multiphase resonant converters, and in particular to coupled multiphase LLC resonant converters, controllers therefore, and methods of controlling such converters.

### BACKGROUND

There is a growing trend towards more compact and energy efficient on-board charges, which in turn is increasing the need for efficient and scalable power electronic converters. For high-power applications resonant converters, such as LLC converters (which includes a resonant tank having both a capacitor and inductor, in addition to a magnetising inductance involved in the transfer of power from the primary to secondary side) offers the potential for high efficiency. With increasing power requirements multiphase solutions such as multiphase coupled-LLC resonant converters, become an increasingly attractive proposition.

One known implementation of the LLC resonant converters is a three-phase topology, in which each of three LLC branch are arrange in half-bridge mode, the three branches being connected together in a star, or delta configuration. To control such converters, typically the current in each branch is sensed.

### SUMMARY

According to a first aspect of the present disclosure, there is provided a controller for multi-phase coupled-LLC, and coupled-CLLC, resonant converters, 1600) having a plurality of primary-side LLC circuits, each comprising a series-arrangement of a capacitance and two inductances (Lr, Lm) between a respective input node and a common node, wherein each input is switchable between a first state connected to a first supply voltage level and a second state connected to a second supply voltage level, the controller comprising: a hysteretic controller; and a finite state machine, FSM; wherein the hysteretic controller is configured to trigger a change of state of the FSM in response to a voltage level of a resonant capacitor of a one of the LLC circuits crossing a trigger voltage level; and wherein the FSM is configured to change between a plurality of states, wherein each state corresponds to a different combination of states for each of the LLC circuits of the multiphase converter.

Thus, according to embodiments of the present disclosure, the concept of hysteretic charge control is applied to coupled multi-phase LLC, and CLLC converters. Use of multiphase LLC or CLLC converters may enable a reduction in volume, since fewer magnetic flux paths are required, and the interleaving may reduce the output ripple reducing the requirement for large outputs with an capacitors.

In one or more embodiments, the FSM is configured to change state according to a directed graph of the plurality of states. Using a directed graph in the FSM can aid in ensuring the proper polarity transitions of the phases, and in particular in ensuring the sequence is correct.

In one or more embodiments, the resonant converter is a three-phase coupled LLC resonant converter. In one or more other embodiments, the resonant converter is a three-phase coupled CLLC resonant converter. In general, three-phase converters provide a good balance between component costs, i.e. bill of materials, BOM, and low ripple, without requiring a large output smoothing capacitor.

In one or more embodiments, the FSM comprises of 6 allowed states, and excludes both a first excluded state, according to which the inputs are all connected to the first supply voltage level, and a second excluded state, according to which the inputs are all connected to the second supply voltage level.

In one or more such embodiments, a change from one state to an immediately subsequent state, comprises only one of the LLC circuits switching between its respective first and second state.

In one or more embodiments, the hysteretic controller is configured to trigger the FSM to switch the input of a one of the LLC circuits from the first state to the second state, in response to the voltage level of the respective resonant capacitor rising above a respective high voltage trigger level. The high voltage trigger level may be set, or altered, according to the required output power, and provides one bound of the hysteretic control.

In one or more embodiments, the hysteretic controller is configured to trigger the FSM to switch the input of a one of the LLC circuits from the second state to the first state, in response to the voltage level of the respective resonant capacitor falling below a respective low voltage trigger level. The low voltage trigger level may be set, or altered, according to the required output power, and provides another bound of the hysteretic control.

In one or more embodiments, the directed graph is a first directed graph, and wherein the FSM is further configured to implement a start-up mode by changing according to a start-up directed graph which is different from the first directed graph. Such a start-up sequence may assist in preventing an unwanted 180°-0°-0° operation of the phases, in a three-phase system.

In one or more embodiments, the FSM is further configured to implement a start-up mode, in which the FSM enforces a delay between successive changes of state. In one or more such embodiments, the FSM switches each input to the first state for at least a minimum time (Tmin).

In one or more such embodiments, according to the start-up directed graph, the FSM sequentially switches the input of each LLC circuit to the first state, while a remainder of the LLC circuits are in the second state. Forcing such a start-up sequence may provide a good "see" for a 120°-120°-120° operation, in the case of a three-phase system.

According to a second aspect of the present disclosure, there is provided a multi-phase coupled resonant converter, comprising: a plurality of primary-side switchable LLC circuits, each having an input which is configured to switch between a first state connected to a first supply voltage level and a second state connected to a second supply voltage level, and each having a primary side-coil of a respective transformer; a secondary side circuit comprising a plurality of secondary-side coils, one for each of the transformers, a plurality of rectifier, each connected to the output of a respective secondary coil, the rectifiers having commonly connected outputs connected to an output of the resonant converter; and a controller as described above.

In one or more embodiments, the multi-phase coupled resonant converter is a coupled LLC resonant converter. In one or more other such embodiments, the multi-phase coupled resonant converter is a coupled CLLC resonant converter.

In one or more embodiments, the multi-phase coupled resonant converter has three phases.

In one or more embodiments, the FSM comprises of 6 allowed states, and excludes both a first excluded state, according to which the inputs are all connected to the first supply voltage level, and a second excluded state, according to which the inputs are all connected to the second supply voltage level.

In one or more embodiments, a change from one state to an immediately subsequent state, comprises only one of the LLC circuits switching between its respective first and second state.

In one or more embodiments, the hysteretic controller is configured to trigger the FSM to switch the input of a one of the LLC circuits from the first state to the second state, in response to the voltage level of the respective resonant capacitor rising above a respective high voltage trigger level

In one or more embodiments, the hysteretic controller is configured to trigger the FSM to switch the input of a one of the LLC circuits from the second state to the first state, in response to the voltage level of the respective resonant capacitor falling below a respective low voltage trigger level.

According to a third aspect of the present disclosure, there is provided a method of operation of multi-phase coupled-LLC and multi-phase coupled-CLLC resonant converters, having a plurality of phases each comprising an LLC circuit, the method comprising: measuring a voltage level of a respective resonant capacitor for each phase of the plurality of phases; triggering a change of state of a finite state machine, FSM, in response to a voltage level of the resonant capacitor of a respective one of the LLC circuits, wherein the FSM is configured to change between a plurality of states, wherein each state corresponds to a different combination of states for each of the LLC circuits of a multiphase converter. Each LLC circuit may comprise a series-arrangement of a capacitance and two inductances between a respective input node (and a common node, wherein each input is switchable between a first state connected to a first supply voltage level and a second state connected to a second supply voltage level.

In one or more embodiments, the change the state is according to a directed graph of the plurality of states. In one or more embodiments, a change from one state to an immediately subsequent state, comprises only one of the LLC circuits switching between a respective first and second state.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program

The computer program may be provided on a computer readable medium, which may be a physical computer readable medium, such as a disc or a memory device, or may be embodied as another non-transient signal.

### BRIEF DESCRIPTION OF THE DRAWINGS

Reference will now be made to the accompanying drawings, which are not necessarily drawn to scale, and wherein:
FIG. 1A illustrates a single-phase LLC resonant converter;
FIG. 1B shows various waveforms associated the converter of FIG. 1A;
FIG. 2 illustrates a multi-phase coupled-LLC resonant converter;
FIG. 3 shows the primary circuits of the three-phase coupled-LLC of FIG. 2;
FIG. 4A, FIG. 4B, and FIG. 4C show three configurations or states of the inputs of the converter of FIG 2;
FIG. 5 shows a directed graph of possible states for the inputs of the converter of FIG. 2;
FIG. 6 which shows an allowable switching sequence for the converter of FIG. 2;
FIG. 7 shows a finite state machine (FSM) containing the states and the jump conditions for a three-phase resonant converter;
FIG. 8 shows a block diagram of a control loop according to embodiments of the present disclosure;
FIG. 9 shows, pictorially, the switching of each of the three phases;
FIG. 10 shows simulated results of the voltage across the resonant capacitor of each phase;
FIG. 11 shows the space vector of the PWM gating signal into the gates of the three phases, mapped to 2-dimensional time varying vectors using the Clarke Transform, in an undesired mode of operation;
FIG. 12 shows the corresponding voltages across the resonance capacitors, and the resonant currents through the phases, in this undesired mode of operation;
FIG. 13 shows a start-up sequence for the FSM;
FIG 14A shows the Clarke Transform for the converter control, including the start-up sequence of FIG 13;
FIG. 14B shows the corresponding voltages across the resonance capacitors, and the resonant currents through the phases
FIG 15 shows a FSM containing the states and jump conditions for a three-phase resonant converter, which avoids the undesirable mode by an alternative mechanism; and
FIG. 16 shows a multi-phase coupled CLLC resonant converter.

It should be noted that the figures are diagrammatic and not drawn to scale. Relative dimensions and proportions of parts of these figures have been shown exaggerated or reduced in size, for the sake of clarity and convenience in the drawings. The same reference signs are generally used to refer to corresponding or similar features in modified and different embodiments.

### DETAILED DESCRIPTION

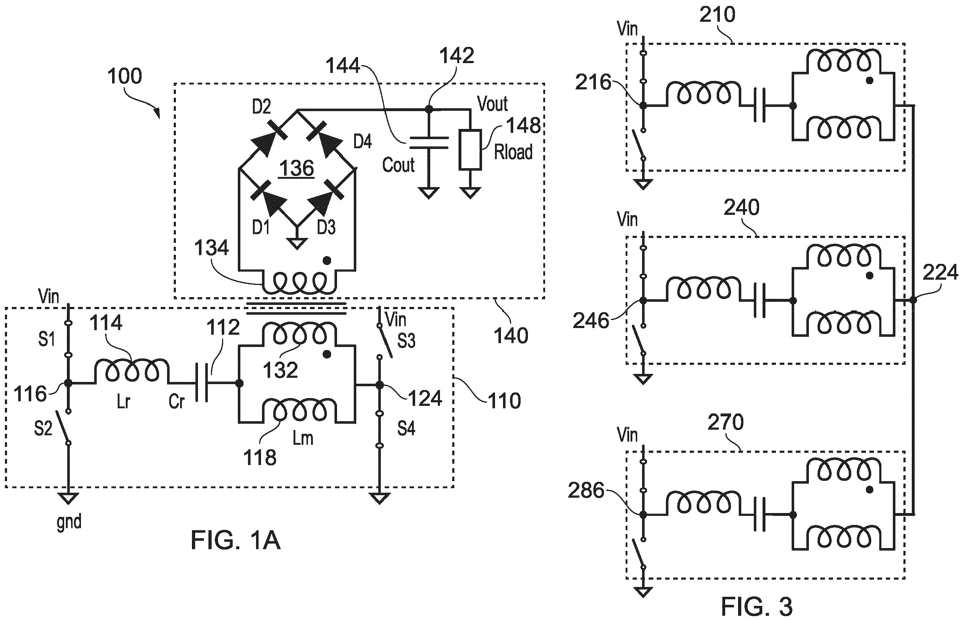

FIG. 1A illustrates a single-phase full-bridge LLC resonant converter 100. The converter has a primary side 110 which includes a resonant capacitor or capacitance Cr 112 and resonant inductor or inductance 114, connected in series between a switched input node 116 and a magnetising inductance Lm 118, which can be either part of a physical transformer (as inductance) or can be installed as a separate inductor part. As used hereinunder, "inductance" will be used to indicate one or more component inductors. An "inductance" can thus be implemented as a single component (typically an inductor), or as a combination of components (such as multiple inductors, or another components such as a coil of a transformed which provides an electrical inductance). In operation, the switched input node 116 is switched, by means of switches S1 and S2, between a first input voltage level such as Vin and a second input voltage level, such as ground, gnd, as shown. The magnetising inductance Lm 118 is connected to a second node 124, which similarly, in operation, is switched, by means of switches S3 and S4, between the first input voltage level Vin and the second input voltage level such as ground, gnd. The nodes 116 and 124 are switched in anti-phase, so that the voltage across the series LLC arrangement is periodically reversed. On the secondary side 140, a secondary side inductance 134 is magnetically coupled to the primary side inductance (which is part of the magnetising inductance 118). In practical implementations, one or more of the inductances, even Lr, may be implemented as part(s) of the transformer coils. Thus in some implementations of this system, all the inductor elements present in the electrical schematic are part of the physical transformer. An ideal transformer, as used in the circuit schematic drawing, has no inductive properties but rather represents a lossless transfer of power across an isolation barrier. The magnetising inductor as well as the resonant inductors can all be "integrated" in the same physical transformer through appropriate design. External inductors can also be used, but any physical transformer will have some series inductance and parallel inductance as part of its electrical response, often referred to as "parasitic inductance".

The secondary side inductance 134 is connected to a rectifier, which as shown may be full-bridge passive rectifier formed from diodes D1 - D4; in other examples, active rectification using switches such as FETs or other transistors may be employed. The rectifier output is supplied at the output node 142. The voltage Vout at the output node 142 may be smoothed by an output capacitor Cout 144 and is available to a load Rload 148.

The resonant tank formed by capacitor Cr 112 and inductor Lr 114 (along with magnetising inductance Lm 118) has a resonant frequency. The skilled person will appreciate that this frequency depends, on, in addition to Lr and Cr, the magnitude of Lm , which in turn depends on the load on the secondary side. In operation, the switches S1 and S2, and S3 and S4, are switched at or close to the resonant frequency in order to periodically reverse the voltage across the magnetising inductance, to transfer power to the secondary side. As mentioned in the introduction, typically the current on the primary side is sensed, in order to control the timing of the switching.

An alternative control mechanism for LLC converters is to sense the voltage across the resonant capacitor 112. Such a control method is often described as "charge control" since a change in voltage across the resonant capacitor 112 corresponds to a quantity of charge which has transferred through the magnetising inductance Lm 118. The control is effective by comparing the sensed voltage to hysteretic bands, and switching the polarity of the primary side circuit whenever the voltage moves outside of the control band. Through proper switching of the polarity, and assuming negligible losses in the system, the amount of charge flowing out of the input port Vin, and into the output port Vout, can be controlled.

Although FIG. 1A illustrates a full-bridge configuration for the LLC, having two synchronous half-bridge at the input side, the invention is not limited to such configurations, In particular, there is another form in which node 124 and Lm inductor on the input side are connected to ground, without the second synchronous half-bridge.

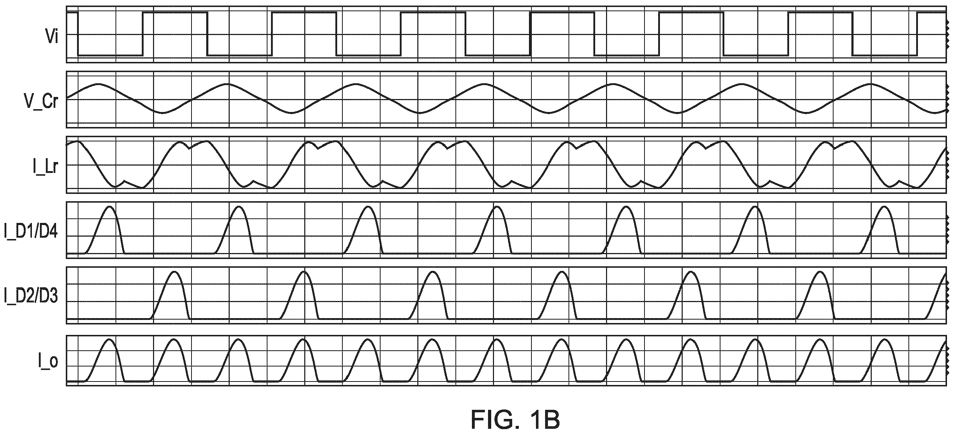

FIG. 1B shows various current and voltage waveforms for the single phase LLC converter shown in FIG. 1A, at various points of the circuit as indicated.

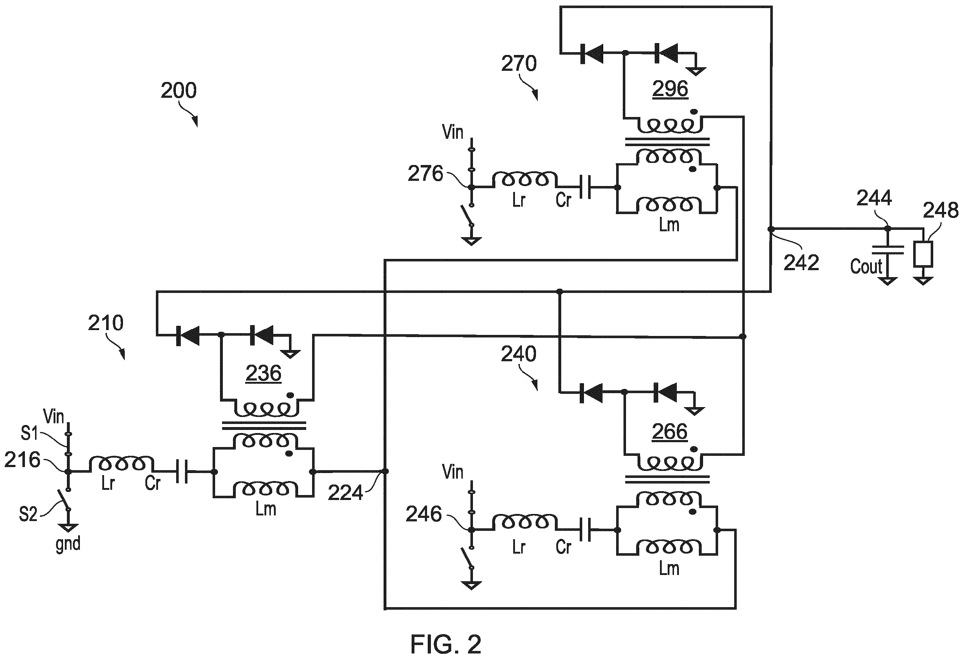

Turning now to FIG. 2, this illustrates a multi-phase coupled-LLC resonant converter, in this case a single active bridge (SAB) LLC three-phase converter. Each phase, or branch, 210, 240 and 270 has a primary side corresponding to that shown in FIG. 1 with a series arrangement of a capacitance Cr and two inductances, and Lr and Lm. However, instead of each primary side being switched in "full-bridge" mode, only the input switched node (216, 246 and 276 for the three phases) is switched between the two input voltage supply levels (which, as shown, are typically Vin and ground). The second node of each branch is commonly connected to a node 224. On the secondary side, the outputs from the rectifiers 236, 266 and 296 are commonly connected at an output node 242, which is connected to the output capacitor Cout 244 and the load 248. Thus, as shown, in FIG. 2 the secondary side only has 2 diodes per rectifier, for each phase, and is a diode half-bridge configuration. In alternative configurations, the diode half-bridge of the secondary side is replaced with switches to have a synchronous half-bridge rectifier at the output, which makes it a DAB LLC topology.

FIG. 3 shows the same three-phase coupled-LLC converter as FIG. 2, but, in this and subsequent figures, the secondary side circuits of each of the LLC circuits 210, 240 and 270 have not been shown, in order to facilitate the understanding of the present disclosure.

The present disclosure is concerned with implementing hysteretic charge control to multiphase coupled LLC (and, as will be explained in more detailed hereinbelow, CLLC bidirectional) converters. If each phase of the coupled LLC is controlled separately, with a conventional single-phase hysteretic switching scheme, the phases would not have a proper switch timing, and the converter would not be able to self-oscillate. To have a coupled multi-phase resonant converter self-oscillate there should be an additional constraint that enforces proper timing between the phases to allow current to circulate properly from one phase to the other.

The skilled person will be aware that, there are four general principle mechanisms to couple the phases in three-phase resonant converters: (a) Dual Active Bridge (DAB) LLC converters have synchronous half bridges at the output and at the input; (b) DAB CLLC are resonant converter in which there is an additional capacitor and inductor on the output side, as well as half-bridges on both sides; (c) Single Active Bridge (SAB) LLC have synchronous half-bridges at the input, but passive (diode-based) bridges at the output; and (d) SAB CLLC resonant converters, having an additional capacitor and inductor on the output side, as well as half-bridges on the input and diode bridges at the output side.

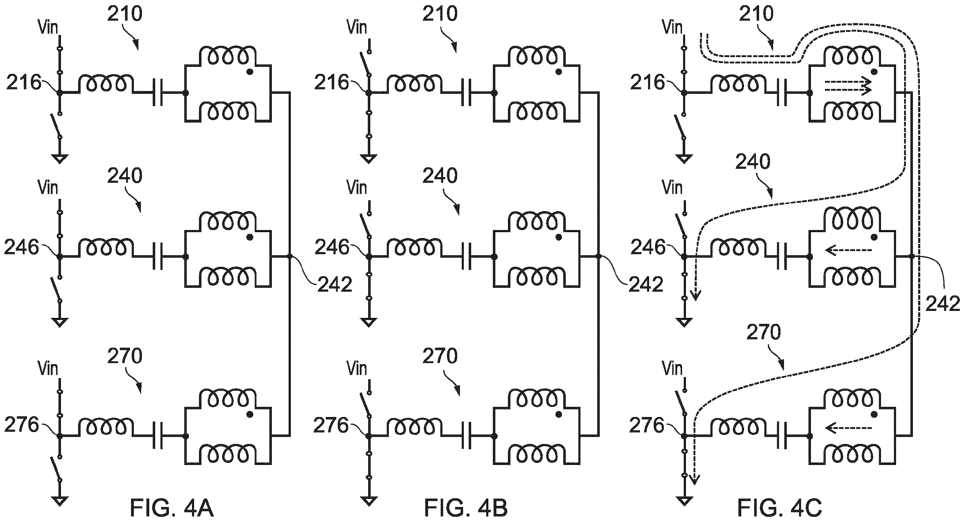

FIG. 4A, FIG. 4B, and FIG. 4C show three of the possible eight configurations or states of the input nodes 216, 246, 276, of the three-phase coupled-LLC shown in FIG 2. In the first configuration shown at FIG. 4A, the respective input to each of the LLC circuits is connected to Vin, and in the second configuration, shown at FIG. 4B, the respective input to each of the LLC circuits is connected to ground. In each of these configurations, there is no path between Vin and ground, so no current can flow. In the configuration shown at FIG. 4C, however, some of the inputs (in this case one input, 246) are connected to Vin and the remainder of the inputs (in this case two inputs, 212 and 276) are connected to ground. As a result, there is at least one current path between Vin and ground. In the configuration shown, there are two current paths, a first current path through circuit 210 and circuit 240, and a second current path through circuit 210 and circuit 270.

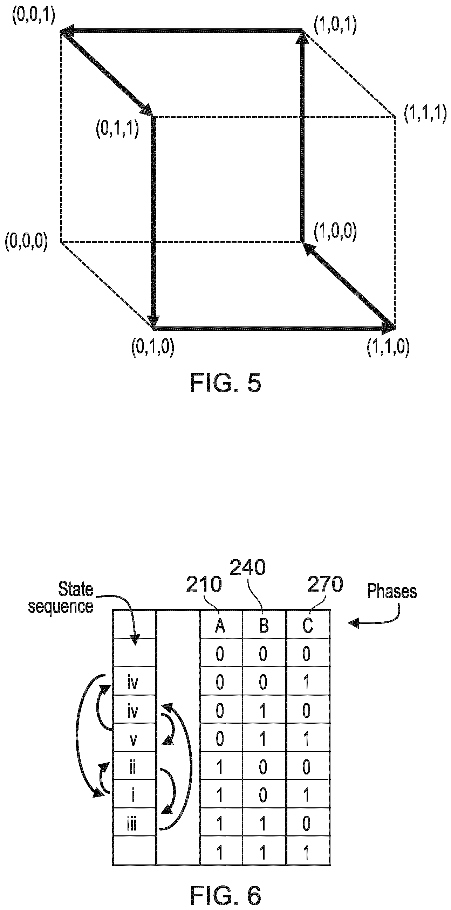

The states of the inputs (that is to say whether they are each in a first state connected to Vin or in a second state connected to ground), can be represented by a vector, in which the elements - either one or zero - represent the connection to Vin or to ground respectively. Thus the input state of the configuration shown in FIG. 4A may be represented as (1,1,1), that shown in FIG. 4B may be represented as (0,0,0), and that shown in FIG. 4C as (1,0,0). The dynamics of a coupled LLC converter may then be described as follows, with reference to FIG. 5 which shows a directed graph of possible states for the inputs, and FIG. 6 which shows an allowable switching sequence (I, to ii, to iii, and so on to state vi, and thence back to state i).

Consider an initial switch state (1,0,1), then the current will flow out of the input port of phases A (210) and C (270) and into the input port of phase B (240). This flow causes the capacitors of phase A and C to charge up positively and the capacitor of phase B to charge negatively, meanwhile the rate of current increase in phases A and C and the rate of current decrease in phase B starts to decrease. This dynamic of the system is what is considered as resonant behaviour of the circuit. Once the voltage on the resonant capacitor of phase 3 has reached the value set by a hysteretic control law, which will be described in more detail hereinbelow, the switch state jumps to state (1,0,0); while the current flow direction is maintained due to the inductance in the resonant path, the rate of change of the resonant current and voltages changes. After this transition the rate at which the current in phase C is decreasing is higher than the rate at which the current in phase A is decreasing, while the rate of decrease of the current in phase C continues to decrease until the phase 3 capacitor voltage is low enough that it reaches the lower bound of the hysteretic window, which causes the state to change to (1,1,0).

The condition used for each state transition depends on the expected change from one state to the other. For example, if phase B (240) changes from 0 to 1, then the condition checked to make that happen is that the capacitor voltage of phase B is less than the lower bound of the hysteretic window. On the other hand, if phase B changes from 1 to 0, as in the case of state transition from (0,1,1) to (0,0,1), then the voltage of the capacitor of phase B has to be compared to the upper bound of the hysteretic window and when it is greater than the upper bound the jump from one state to the other is made.

Although the switching sequence is predetermined by the topology of the directed graph, when to jump from one node to the other is not. In conventional frequency control (i.e.: not self-oscillating), the condition on when to jump from one node to the other is imposed by a clock that keeps track on how long the converter stays in each node, whereas for hysteretic control the jump condition is imposed by the voltage level of each phase's resonant capacitor.

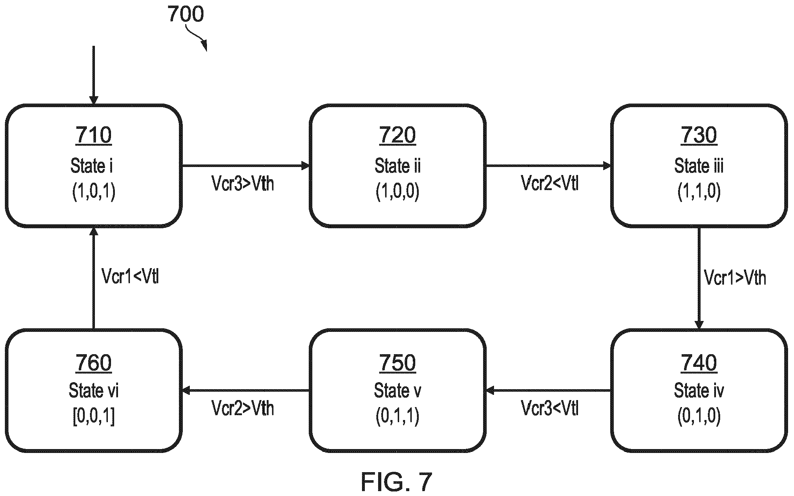

A finite state machine (FSM) 700 containing the states and the jump conditions for a three-phase resonant converter is shown in FIG. 7. It can be observed that the jump condition depends on the state which the converter is in. When the converter is in state (1,0,1), also referred to herein as state 'i', the system jumps to state (1,0,0) only when the voltage on the resonant capacitor of phase C exceeds the hysteretic window (i.e the upper reference limit Vth) set by the inner loop controller. That is to say the system moves to state (1,0,0,), or "ii" (730 in the FIG.) only when the condition Vcr3 > Vth. It should be noted that if the voltage across one (or both) of the other resonant capacitors crosses the upper reference voltage limit, that is to say, either Vcr2 > Vth, or Vcr1 > Vth, that does not trigger a change of state for the finite state machine. Put another way, voltage of some of the phases may go outside of the hysteretic limit without triggering a change of state. Similarly, the finite state machine only triggers a jump from state "ii" 720 i.e. (1,0,0) to state "iii" 730 i.e. (1,1,0) when the voltage across the resonant capacitor in phase B crosses below the lower voltage limit threshold, that is to say Vcr2 < Vtl. Excursion of Vcr1, or Vcr3 below the threshold does not trigger a change of state. A corresponding excursion of Vcr1 for phase A (only) above Vth triggers a change to state "iv" 740 ie (0,1,0), and thereafter an excursion of Vcr3 for phase C (only) below Vtl triggers a change to state "v" 750 ie (0,1,1,) and then an excursion of Vcr2 for phase B (only) above Vth triggers a change to state "vi" 760 ie (0,0,1). Finally, an excursion of Vcr1 for phase A (only) below Vtl triggers a change to back to state "i" 710 ie (1,0,1,). It will be appreciated that the high voltage trigger level may be the same for all phases, or may be differ from phase to phase. Similarly, the low voltage trigger level may be the same for all phases, or may be differ from phase to phase. In particular, in the theoretical situation that the components are all identical the same thresholds for all branches may be identical, and this results in a balanced operation. In practical applications, in which component values vary within a tolerance, different thresholds (trigger levels) may result, such that the currents may be a little unbalanced, but the system can still work.

In one or more embodiments, the FSM can be synthesized as digital circuitry, for example in the form of look up tables (LUT) implemented as chained multiplexers (muxes), thereby avoiding a need for conventional "software" or a computer program. Since an FSM is equivalent to "pure" boolean logic, which is synthesizable by a wide range of different digital circuit implementations. It generally only requires a set of inputs, in a specific sequence to perform the desired output, and thus is not limited to any specific implementation.

Thus, according to one aspect of the present disclosure, there is a controller for a multi-phase coupled-LLC, resonant converter 200 having a plurality of primary-side LLC circuits 210, 240, 270, each comprising a series-arrangement of a capacitance Cr and two inductances Lr, Lm between a respective input node 216, 246, 276 and a common node 224, wherein each input is switchable between a first state connected to a first supply voltage level Vin and a second state connected to a second supply voltage level gnd is provided. The controller comprises: a hysteretic controller; and a finite state machine, FSM. The hysteretic controller is configured to trigger a change of state of the FSM in response to a voltage level of a resonant capacitor of a one of the LLC circuits crossing a trigger voltage level; and is further configured to change between a plurality of states, wherein each state corresponds to a different combination of states for each of the LLC circuits of the multiphase coupled-LLC.

The finite state machine may be described as implementing the changes of state according to a directed graph of a plurality of states. In particular, in the case of a three-phase CLLC, the directed graph may take the form shown in FIG. 5.

All of the states include at least one of the phases having its respective input connected to the first voltage supply such as Vin, and the at least one of the other phases having its respective input connected to the second voltage supply such as ground. Thus, the skilled person will appreciate that two "states" (all-grounded inputs, and all inputs connected to the supply voltage) are excluded from the finite state machine.

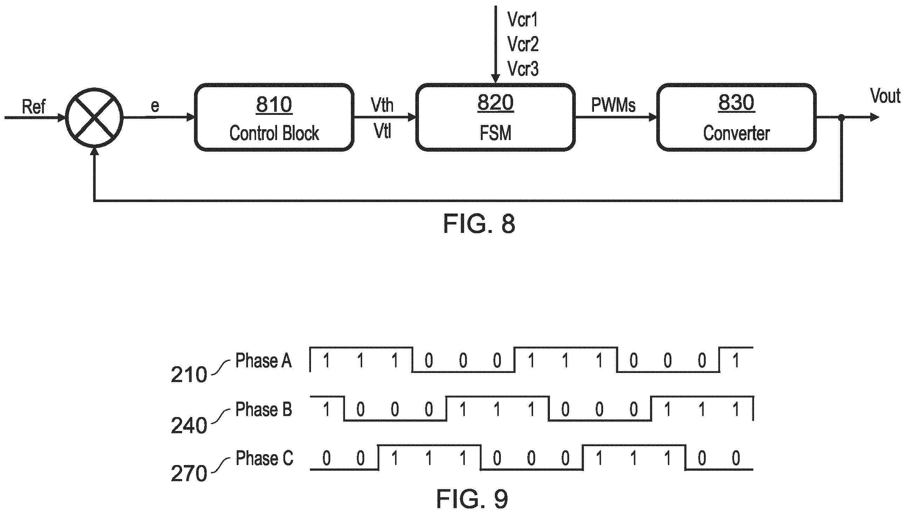

FIG. 8 shows a block diagram of a control loop according to embodiments of the present disclosure. A control block 810 receives an error signal, corresponding to an error between a desired voltage or power output (Ref) and an actual voltage or power output (shown here as voltage, Vout), and generates upper and lower voltages hysteretic limits Vth and Vtl. In the finite state machine 820, the voltage across the resonant capacitors Cr of each other phases (Vcr1, Vcr2 and Vcr3) is compared with the relevant threshold voltages, in the ordered manner described above. In the event that a relevant threshold is crossed, control signals (shown as "PWMs" in the FIG.) are sent to the converter 830 to switch the input of the relevant phase.

The skilled person will appreciate that appropriate "dead times" may be introduced between the opening of one switch (such as, in this case, high-side S1) and the closing of the corresponding other switch (such as, in this case the corresponding low-side switch S2).

FIG. 9 shows, pictorially, the switching of each of the three phases A 210, B 240 and C 270, between the so-called "high" state in which the input is connected to the first supply voltage (shown as "1") and the so-called "low state" in which the input is connected to the second supply voltage (shown as "0"). It will be apparent that only one phase changes at any point in the cycle.

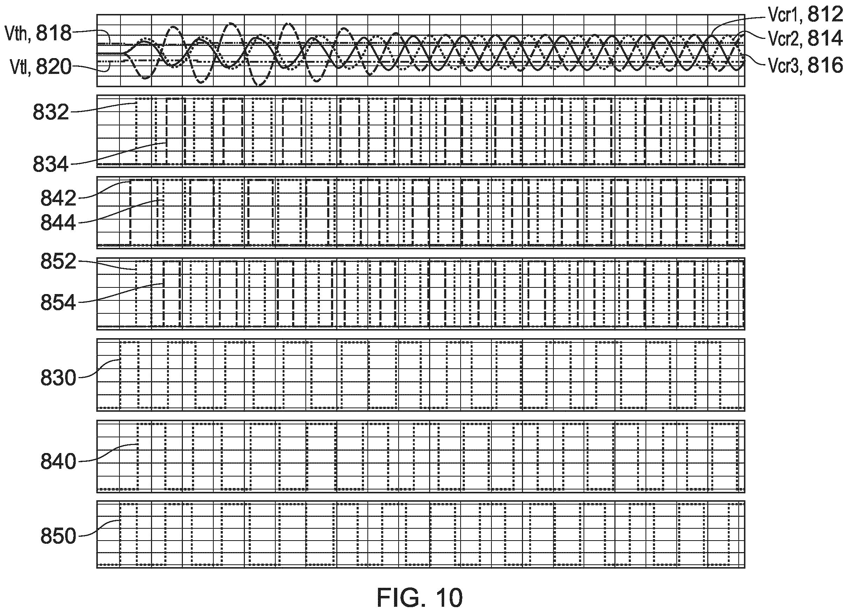

FIG. 10 shows simulated results of the voltage across the resonant capacitor of each phase, Vcr1 812, Vcr2 814 and Vcr3 816 during start-up and settling of operation of a resonant converter as shown above in FIG. 2. The upper and lower voltage threshold levels for the resonant capacitors, Vth and Vtl are shown at 818 and 820 respectively. The parts of the cycles during which the resonant capacitors fall outside of the hysteretic limits are shown for phase A (Vcr1) at 832 exceeding Vth and at 834 being less than Vtl. Similarly for phase B (Vcr2) at 842 exceeding Vth and at 844 being less than Vtl, and for phase C (Vcr3) at 852 exceeding Vth and at 854 being less than Vtl. Finally, the control of the (in this case highside, S1) input switch for each of the phases A, B and C are shown respectively at 830, 840, and 850. The correspondence between the threshold excursions beyond the reference levels and the control of the gates are shown in the FIG..

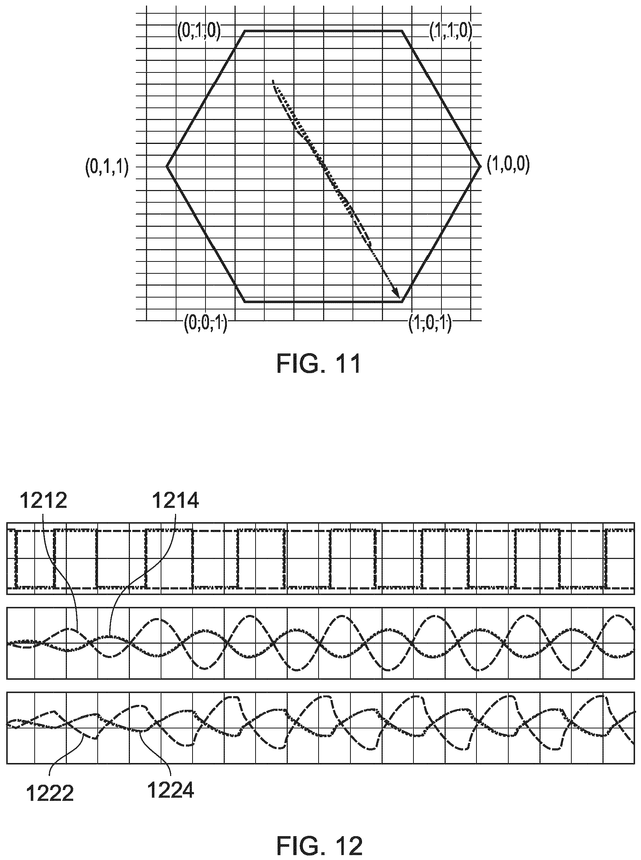

As shown in FIG 10, following a relatively short settling period during which the controller balances the currents in each phase, the system settles to a uniform 120° phase separation between each of the phases. However, it has been found that there is another stable operating state which is generally to be avoided. In particular, start-up transient simulations have shown that it is possible for the system to lock into a 180°- 0°- 0° phase configuration, as shown in FIG. 11.

FIG. 11 shows the space vector of the PWM gating signal into the gates of the three phases, mapped to 2-dimensional time varying vectors using a Clarke Transform. The phase-locking behaviour happens because the only states which the converter is allowed to switch between are (0,1,0) and (1,0,1). This could occur if the switching transitions for the other states are satisfied at the same time due to the symmetric start-up of the phase currents and voltages, and could cause the intermediate states in the finite state machine effectively to be skipped: the directed graph requires that the FSM goes through the intermediate state or states (for instance (0,1,1) followed by (0,0,1), but once it reaches (say state 0,1,0) there is no need to wait for the condition Vc3<vtl to be met, because it is already met, so the FSM immediately goes to the next state, the same thing happens to the next state etc. In this scenario, there are only 2 states for which the transition condition is not satisfied *a priori,* and during which the FSM has to "wait", so this 180-0-0 behaviour is formed in the system. The phase locked behaviour is shown as trajectories along the diagonal for the resonant current and voltage space vectors, whereas the desired trajectories should be similar to circles.

FIG. 12 shows the corresponding voltages across the resonant capacitors, Vcr2 at 1212 and both Vrc1 and Vrc3 overlaying each other at 1214. The resonant current through Phase B is shown as 1222 and through both phase A and phase C at 1224. It is clear the phase B current is equal and opposite to the sum of the currents through phase A and phase C.

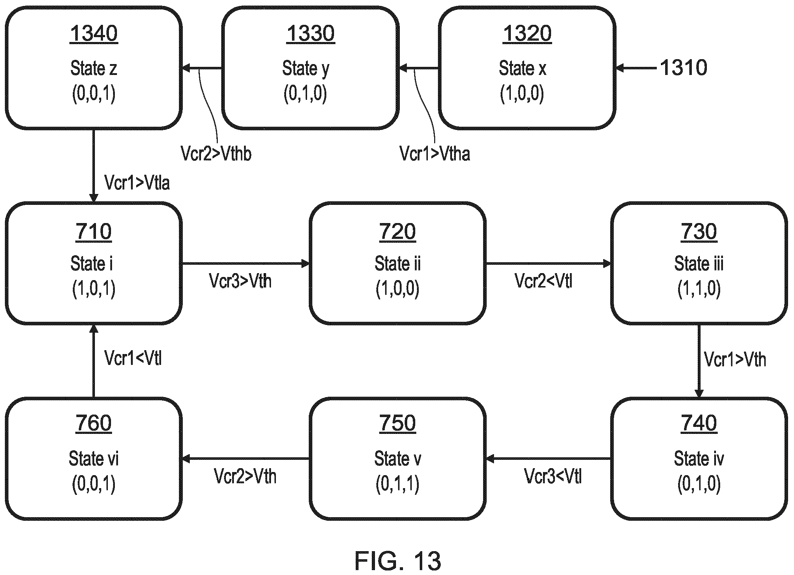

This undesirable steady state solution can be avoided by including a start-up sequence (xyz), having three additional states x 1320, y 1330 and z 1340, as shown in FIG. 13. The start-up commences, at 1310 by moving to state x 1320, corresponding to (1,0,0), and once the voltage across the phase A resonant capacitor exceeds a first start-up upper threshold Vtha (that is to say Vcr1 > Vtha), moves to state y 1330 corresponding to (0,1,0) and from there, once the voltage across the phase B resonant capacitor exceeds a second start-up upper threshold Vtha (that is to say Vcr2 > Vthb), to state z 1340, corresponding to (0,0,1). The control subsequently joins the main finite state machine 700 once the voltage across the phase a resonant capacitor falls below a first start-up lower threshold Vtla.

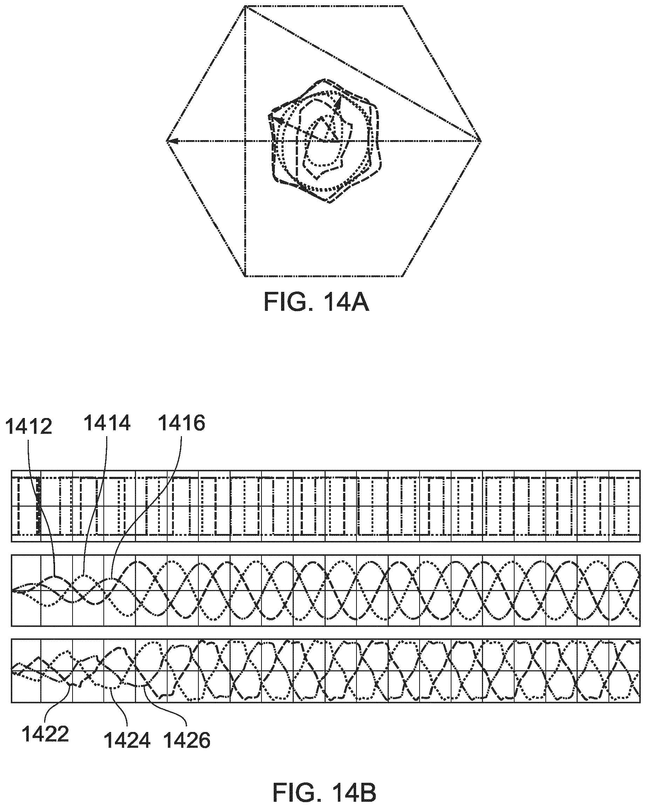

FIG 14A shows the resulting Clarke Transform for the control, including the start-up sequence. FIG. 14B shows the corresponding voltages across the resonance capacitors, Vcr1, Vcr2, and Vcr3 at 1412, 1414 and 1416. The resonant current through each phase is shown at 1422, 1424, 1426. It is apparent that the phases quickly settle to the stable 120° phase spacing, with equal current-sharing.

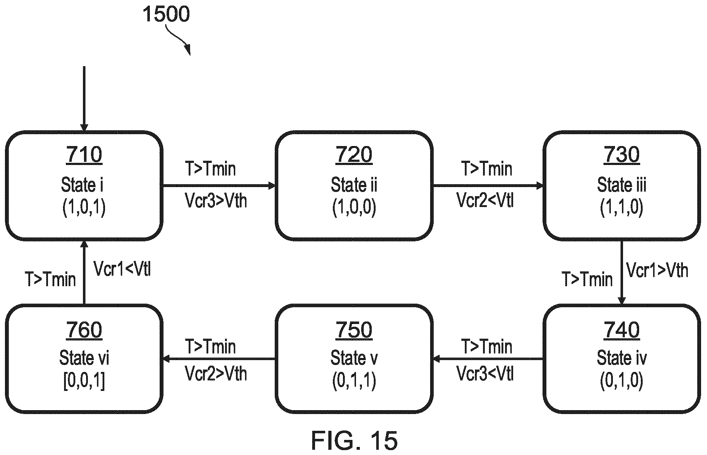

FIG 15 shows a FSM containing the states and jump conditions for a three-phase resonant converter, which avoids the undesirable mode by an alternative mechanism. In the embodiment shown, a minimum time Tmin is required between successive changes of state, of the FSM. This can be implemented in a variety of ways, For example it may be enforced that each time a high-side switch is closed, (thereby starting the "on-time" for that phase), it cannot be opened, until at least a minimum period or time internal Ton has elapsed. (ie T>Ton), where T is the duration of the "on-time" of the high-side switch of the relevant phase. As an alternative ,non-limiting, implementation, the FSM may be configured to, upon closing of one high-side switch, inhibit closing of any other high-side switch (which would be required for the FSM to switch, or jump, state) until at least a minimum time (Tmin) has elapsed. Such a constraint would prevent the FSM "racing" over intermediate states, and thus preclude the undesired stable 180° - 0° - 0° operation.

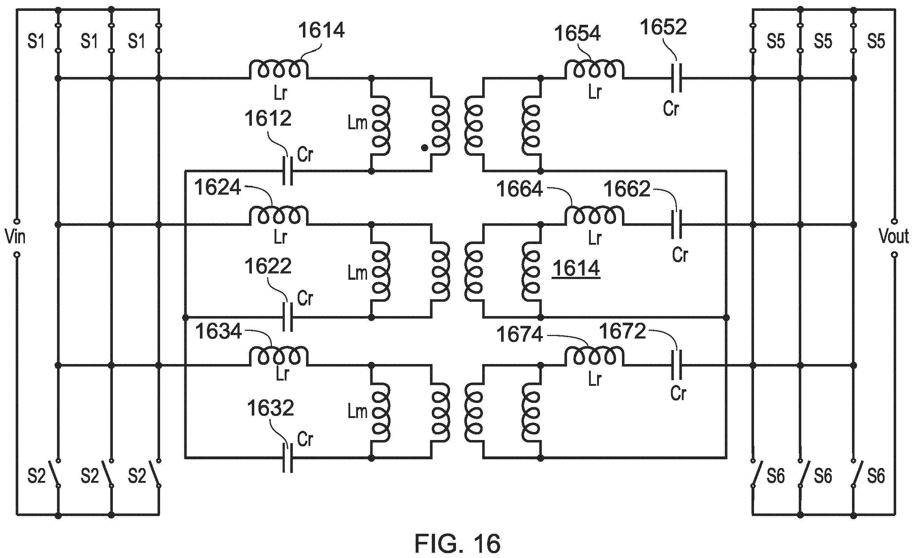

It will be appreciated that the value of Ton (or Tmin) chosen may have an effect of the range of control possible by the system. For example, reduction in the required power for such a coupled LLC generally results in faster switching, as the high and low voltage trigger levels become closer together. If the required output falls to low, it may be that the switching speed set by the hysteretic voltage trigger levels is faster than 1/Tmin. For any particular application, this may be addressed by suitable choice of Tmin; alternatively, it may be addressed by imposing the constraint of the minimum time in each phase only during a start-up mode. Inclusion of a minimum on-time in each phase may also, in some applications, the effective at reducing the settling time for the converter to converge on steady-state operation, in particular during changes in load steps. The settling time may reduce, with increasing value of Tmin, however this may need to be balanced or traded with the limitation of the minimum power mentioned above.The discussion above has primarily focused on a multiphase coupled LLC converters. However, the present disclosure is also applicable to bidirectional variants of LLC converters. "Bidirectional" in this context refers in this context to an arrangement in which the converter may operate in both a "forward" mode in which power is converted from a 'primary' side to a 'secondary' side, and a "reverse" mode in which power is converted from the 'secondary' side to the 'primary' side. Such a multi-phase converter is shown in FIG. 16. The converter is typically referred to as a CLLLC converter (standing for Cr.Lr.Lm.Lr.Cr - the Lm being common to both sides) or CLLC converter. Both the 'primary' and 'secondary' sides include an LC resonant tank (Cr 1612 and Lr 1614, on the 'primary' side, and Cr 1652 and Lr 1654, on the 'secondary side, for the first phase, Cr 1622 and Lr 1624, on the 'primary' side, and Cr 1662 and Lr 1664, on the 'secondary side, for the second phase, and Cr 1632 and Lr 1634, on the 'primary' side, and Cr 1672 and Lr 1674, on the 'secondary side, for the third phase). Each side shares the magnetizing inductance Lm. Of course, for a bidirectional converter, the terms 'primary' and 'secondary' are to some extend interchangeable. Instead of a passive diode-based rectifier on the secondary side, active switches (S5 and S6) are used - which can be used in the 'reverse' mode to drive the voltage-polarity of the current supplied to the resonant tanks. In this reverse mode, the switches S1 and S2 act as an active rectifier for the output current. Conversely, in the 'forward mode' switches S1 and S2 control the polarity for each phase's resonant tank, and S5 and S6 act as an active rectifier for the output current.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilized.

Less than all of the steps or functions described with respect to the exemplary processes or methods can also be performed in one or more of the exemplary embodiments. Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A controller for multi-phase coupled-LLC, and coupled-CLLC, resonant converters (200, 1600) having a plurality of primary-side LLC circuits (210, 240, 270), each comprising a series-arrangement of a capacitance (Cr) and two inductances (Lr, Lm) between a respective input node (216, 246, 276) and a common node (224), wherein each input is switchable between a first state connected to a first supply voltage level (Vin) and a second state connected to a second supply voltage level (gnd),
the controller comprising:
a hysteretic controller; and
a finite state machine, FSM;
wherein the hysteretic controller is configured to trigger a change of state of the FSM in response to a voltage level of a resonant capacitor of a one of the LLC circuits crossing a trigger voltage level; and
wherein the FSM is configured to change between a plurality of states, wherein each state corresponds to a different combination of states for each of the LLC circuits of the multiphase converter.

2. The controller of claim 1, wherein the FSM is configured to change state according to a directed graph of the plurality of states.

3. The controller of claim 1 or 2, wherein the resonant converter is a three-phase coupled LLC resonant converter.

4. The controller of claim 1 or 2, wherein the resonant converter is a three-phase coupled CLLC resonant converter.

5. The controller of claim 3 or 4, wherein the FSM comprises of 6 allowed states, and excludes both a first excluded state, according to which the inputs are all connected to the first supply voltage level, and a second excluded state, according to which the inputs are all connected to the second supply voltage level.

6. The controller of claim 5, wherein a change from one state to an immediately subsequent state, comprises only one of the LLC circuits switching between its respective first and second state.

7. The controller of any preceding claim, wherein the hysteretic controller is configured to trigger the FSM to switch the input of a one of the LLC circuits from the first state to the second state, in response to the voltage level of the respective resonant capacitor rising above a respective high voltage trigger level.

8. The controller of any preceding claim, wherein the hysteretic controller is configured to trigger the FSM to switch the input of a one of the LLC circuits from the second state to the first state, in response to the voltage level of the respective resonant capacitor falling below a respective low voltage trigger level.

9. The controller of any preceding claim, wherein the FSM is further configured to implement a start-up mode, in which the FSM enforces a delay between successive changes of state.

10. The controller of claim nine, wherein the FSM switches each input to the first state for at least a minimum time (Tmin).

11. The controller of claim 2 or any of claims 3 to 8 when dependent on claim 2, wherein the directed graph is a first directed graph, and wherein the FSM is further configured to implement a start-up mode by changing according to a start-up directed graph which is different from the first directed graph.

12. The controller of claim 9, wherein according to the start-up directed graph, the FSM is configured to sequentially switch the input of each LLC circuit to the first state, while a remainder of the LLC circuits are in the second state.

13. A multi-phase coupled resonant converter, comprising:
a plurality of primary-side switchable LLC circuits, each having an input which is configured to switch between a first state connected to a first supply voltage level and a second state connected to a second supply voltage level, and each having a primary side-coil of a respective transformer;
a secondary side circuit comprising a plurality of secondary-side coils, one for each of the transformers, a plurality of rectifier, each connected to an output of a respective secondary coil, the rectifiers having commonly connected outputs connected to an output of the resonant converter; and
a controller according to any preceding claim.

14. A method of operation of multi-phase coupled-LLC and multi-phase coupled-CLLC resonant converters, having a plurality of phases each comprising an LLC circuit, the method comprising:
measuring a voltage level of a respective resonant capacitor for each phase of the plurality of phases;triggering a change of state of a finite state machine, FSM, in response to a voltage level of the resonant capacitor of a respective one of the LLC circuits, wherein the FSM is configured to change between a plurality of states, wherein each state corresponds to a different combination of states for each of the LLC circuits of a multiphase converter,
wherein each LLC circuit is comprising a series-arrangement of a capacitance and two inductances between a respective input node (and a common node, wherein each input is switchable between a first state connected to a first supply voltage level and a second state connected to a second supply voltage level.

15. The method of claim 14, wherein the change the state is according to a directed graph of the plurality of states.
